# EUROPÄISCHE PATENTSCHRIFT

(11) **EP 2 121 211 B1**
(45) Veröffentlichungstag und Bekanntmachung des Hinweises auf die Patenterteilung: **11.04.2012**
(21) Anmeldenummer: 08715465.4
(22) Anmeldetag: 11.02.2008
(51) Int. Cl.: B21F 27/12, E04C 2/42

(54) **VERFAHREN ZUM HERSTELLEN VON GITTERROSTEN**
METHOD FOR THE PRODUCTION OF GRATING
PROCEDE DE FABRICATION DE CAILLEBOTIS

(30) Priorität: 09.02.2007 DE 102007007175
(43) Veröffentlichungstag der Anmeldung: 25.11.2009
(73) Patentinhaber: Gebr. Meiser GmbH, 66839 Schmelz-Limbach (DE)
(72) Erfinder: MEISER, Wolfgang, 66636 Tholey (DE)
(74) Vertreter: Vièl, Christof
(86) Internationale Anmeldenummer: PCT/DE2008/000232
(87) Internationale Veröffentlichungsnummer: WO 2008/095482

(56) Entgegenhaltungen:
- WO-A-2007/141035

## Beschreibung

Die Erfindung betrifft ein Verfahren zum Herstellen von Gitterrosten.

Gitterroste werden nach dem Stand der Technik wie folgt hergestellt: Die Tragstäbe bzw. die Tragstäbe und Füllstäbe werden gestanzt und abgelängt, wonach das Pressen des Gitterrostes erfolgt. Anschließend wird der Gitterrost eingefaßt (mit einer Einfassung versehen) und im letzten Arbeitsgang verzinkt, wobei das Verzinken im Tauchverfahren erfolgt.

Nachteilig ist hierbei, daß es beim Verzinken zu einem Wärmeverzug des Gitterrostes kommen kann. Teilweise muß daher der Gitterrost gerichtet werden, um die geforderten Toleranzen nach RAL einhalten zu können. Bei dem Richten besteht die Gefahr der Entstehung von Mikrorissen in der Verzinkung, in deren Bereich es zur Korrosion kommen kann. Weiterhin ist bei dem Verfahren gemäß dem Stand der Technik nachteilig, daß es bei engmaschigen Rosten zu sogenannten "Zinkfahnen" kommen kann, die sich in den Zwischenräumen bilden und die eine Nacharbeit erfordern. Schließlich kommt es häufig zu sogenannten "Zinkspitzen", die eine der Hauptverletzungsgefahren an verzinkten Bauteilen darstellen.

Aufgabe der Erfindung ist es somit, ein verbessertes Verfahren zum Herstellen von Gitterrosten zu schaffen, das die oben geschilderten Nachteile möglichst vermeidet.

Diese Aufgabe wird im Rahmen der Erfindung durch ein Verfahren zum Herstellen von Gitterrosten gelöst, das die folgenden Verfahrensschritte in der folgenden Reihenfolge umfaßt:
- Feuerverzinken des Tragstabbandes oder des Trag- und Füllstabbandes,
- Stanzen und Ablängen der Tragstäbe oder der Trag- und Füllstäbe,
- Pressen des Gitterrostes,
- Einfassen des Gitterrostes.

Diese Vorgehensweise ist in Hinblick auf den Korrosionsschutz gegenüber dem Stand der Technik von Vorteil: Da das Tragstabband bzw. das Tragstab- und Füllstabband in gespaltenem Zustand verzinkt wird, sind alle Flächen und Kanten gegen Korrosion geschützt. Es hat sich überraschender Weise gezeigt, daß auch nach dem Ablängen der Tragstäbe bzw. der Trag- und Füllstäbe der Korrosionsschutz an den ausgeklinkten Flächen durch den kathodischen Schutz sichergestellt ist.

Darüber hinaus ist das erfindungsgemäße Verfahren insofern vorteilhaft, als ein Richten des Gitterrostes nicht mehr erforderlich ist, weil das Verzinken bereits vor dem Pressen des Gitterrostes erfolgt. Somit entfällt die Gefahr der Bildung von Mikrorissen. Auch Zinkfahnen und Zinkspitzen entstehen bei dem erfindungsgemäßen Verfahren keine mehr, da ja das Band und nicht der fertige Gitterrost verzinkt wird.

Schließlich besteht ein bedeutender Vorteil der Erfindung darin, daß die nach dem erfmdungsgemäßen Verfahren hergestellten Gitterroste eine hervorragende Planebenheit aufweisen und auch in Hinblick auf die Winkligkeit und den Diagonalverzug die zulässigen Toleranzen nach RAL bzw. nach DIN um ca. 70 % unterschritten werden.

Eine vorteilhafte Ausgestaltung der Erfindung besteht darin, daß das Tragstabband oder das Trag- und Füllstabband im Durchlaufverfahren feuerverzinkt wird.

Hierbei wird ein hoher Materialdurchsatz bei gleichzeitig guter Qualität der Zinkschicht erreicht, wie dies für eine Fertigung im Industriemaßstab erforderlich ist.

Es hat sich im Rahmen der Erfindung als vorteilhaft erwiesen, daß der Schneidstempel zum Stanzen der Tragstäbe oder der Trag- und Füllstäbe als längliches Flächenelement ausgebildet ist, das an seinem oberen und seinem unteren freien Ende jeweils rotationssymmetrische Verjüngungen aufweist.

Eine bevorzugte Ausbildung der Erfindung besteht darin, daß der Schneidstempel jeweils im sich an den querschnittreduzierten Bereich anschließenden Bereich angeordnete Vertiefungen auf der jeweils der Verjüngung gegenüberliegenden Seite aufweist.

Durch diese Ausgestaltung des Schneidstempels wird die Klemmung von Trag- und Füllstäben wesentlich verbessert.

Es ist zur Erfindung gehörig, daß beim Einfassen des Gitterrostes eine Schweißtemperatur unterhalb der Verdampfungstemperatur des Zinks gewählt wird.

In diesem Zusammenhang hat es sich als vorteilhaft erwiesen, daß beim Einfassen des Gitterrostes das Schweißen als MIG-Löten von verzinkten Stählen mit A 202 M erfolgt.

Dieses Verfahren ist vom TÜV zugelassen und wird beispielsweise im Containerbau, für sicherheitsrelevante Teile und im Automobilbereich eingesetzt.

Nachfolgend wird ein bevorzugtes Ausführungsbeispiel der Erfindung anhand einer Zeichnung näher erläutert.

Es zeigen
- Fig. 1: ein Ablaufschema des erfindungsgemäßen Verfahrens im Vergleich zum Verfahren gemäß dem Stand der Technik,
- Fig. 2: eine Darstellung des erfindungsgemäßen Schneidstempels.

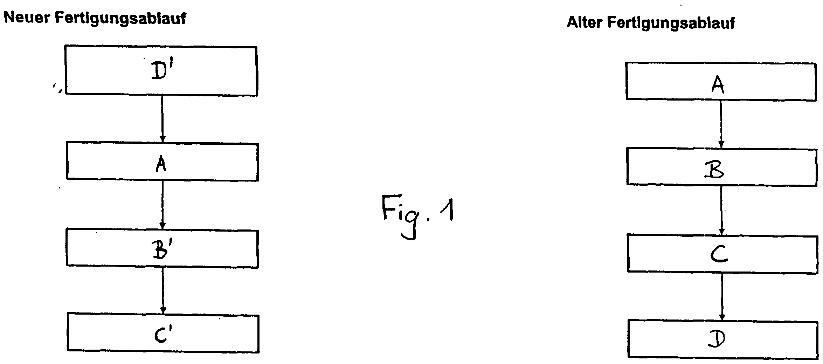

Wie aus Fig. 1 ersichtlich, umfassen sowohl das erfindungsgemäße Verfahren (Neuer Fertigungsablauf) als auch das Verfahren gemäß dem Stand der Technik (Alter Fertigungsablauf) jeweils vier Arbeitsschritte, wobei es jedoch hinsichtlich der zeitlichen Abfolge und auch hinsichtlich einzelner Arbeitsschritte selbst Unterschiede bestehen.

Gemäß dem Stand der Technik werden Gitterroste wie folgt hergestellt: Zunächst werden die Tragstäbe bzw. die Tragstäbe und Füllstäbe gestanzt und abgelängt (Schritt A). Anschließend erfolgt das Pressen des Gitterrostes (Schritt B). Im nächsten Arbeitsgang wird der Gitterrost eingefaßt (Schritt C) und im letzten Arbeitsgang verzinkt (Schritt D), wobei das Verzinken üblicherweise im Tauchverfahren erfolgt. Anschließend müssen die Gitterroste häufig noch gerichtet und eventuell Zinkfahnen und Zinkspitzen in einem Nacharbeitsvorgang entfernt werden (nicht dargestellt).

Bei dem erfindungsgemäßen Verfahren wird hingegen nicht der fertige Gitterrost, sondern das Tragstabband bzw. das Tragstab- und Füllstabband verzinkt (Schritt D'). Aufgrund der wesentlich einfacheren Geometrie ergibt sich hierbei ein umfassender Korrosionsschutz, wie er bei einem komplexen Bauteil nicht erreicht werden kann. Zudem entfallen die mit der Bildung von Zinkfahnen und Zinkspitzen verbundenen Probleme.

Im nächsten Schritt werden dann die Tragstäbe bzw. die Trag- und Füllstäbe gestanzt und abgelängt (Schritt A), was dem ersten Schritt des alten Fertigungsablaufs entspricht. Es hat sich überraschender Weise gezeigt, daß durch den sogenannten kathodischen Schutz auch an den ausgeklinkten Flächen ein ausreichender Korrosionsschutz sichergestellt ist.

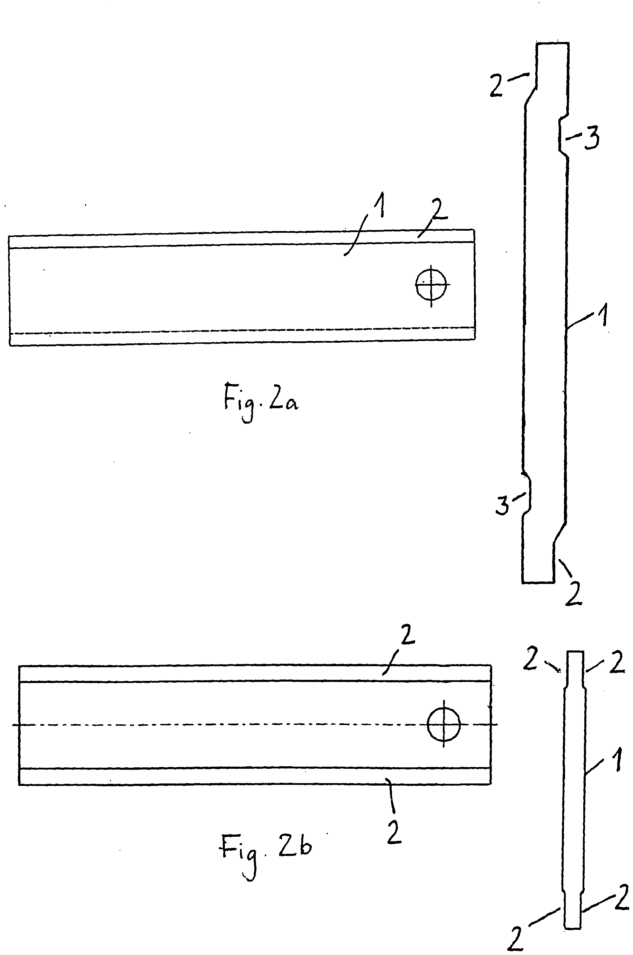

Der darauf folgende Schritt, das Pressen des Gitterrostes (Schritt B') entspricht grundsätzlich dem zweiten Schritt des alten Fertigungsablaufs. Allerdings wird durch geänderte Schneidstempel (siehe Erläuterungen zu Fig. 2) eine bessere Klemmung von Trag- und Füllstäben erreicht.

Im letzten Schritt wird der Gitterrost dann eingefaßt (Schritt C'), wobei bei dem erfindungsgemäßen Verfahren spezielle Schweißparameter und Schweißzusatzstoffe zum Einsatz kommen. Die Schweißparameter (Lötparameter) sind wie folgt:
- Drahtelektrode FONTRAGEN A 202 M (DIN 1733: SG-CU Si 3)
- Schweißzeit 120 ms (6 Perioden), somit Halbierung der Schweißzeit gegenüber dem Stand der Technik
- Stromstärke: ca. 30 -40 % des Schweißstroms gemäß dem Stand der Technik
- Schweißtemperatur unterhalb der Verdampfungstemperatur von Zink

Dieses Schweißverfahren, das als MIG-Löten von verzinkten Stählen mit A 202 M bezeichnet wird, ist vom TÜV zugelassen.

Weder ein Richten der Gitterroste noch ein Entfernen von Zinkfahnen bzw. Zinkspitzen ist bei dem erfindungsgemäßen Verfahren erforderlich.

In Fig. 2 wird schließlich der erfindungsgemäß geänderte Schneidstempel dargestellt.

Während ein herkömmlicher Schneidstempel (Fig. 2b) als längliches Flächenelement (1) ausgebildet ist, das an seinem oberen und seinem unteren freien Ende jeweils spiegelsymmetrische Verjüngungen (2) aufweist, weist der Schneidstempel gemäß der vorliegenden Erfindung (Fig. 2a) Verjüngungen (2) an den freien Enden auf, die rotationssymmetrisch ausgebildet sind. Dies bedeutet, daß die zur Verjüngung (2) führende Querschnittreduktion im Bereich der freien Enden jeweils auf nur einer Seite erfolgt. Darüber hinaus weist der Schneidstempel gemäß der vorliegenden Erfindung jeweils im sich an den querschnittreduzierten Bereich anschließenden Bereich angeordnete Vertiefungen (3) auf der jeweils der Querschnittreduktion gegenüberliegenden Seite auf.

## Patentansprüche

1. Verfahren zum Herstellen von Gitterrosten, das die folgenden Verfahrensschritte in der folgenden Reihenfolge umfaßt:
• Feuerverzinken des Tragstabbandes oder des Trag- und Füllstabbandes,
• Stanzen und Ablängen der Tragstäbe oder der Trag- und Füllstäbe,
• Pressen des Gitterrostes,
• Einfassen des Gitterrostes.

2. Verfahren gemäß Anspruch 1, **dadurch gekennzeichnet, daß** das Tragstabband oder das Trag- und Füllstabband im Durchlaufverfahren feuerverzinkt wird.

3. Verfahren gemäß Anspruch 1, **dadurch gekennzeichnet, daß** der Schneidstempel zum Stanzen der Tragstäbe oder der Trag- und Füllstäbe als längliches Flächenelement (1) ausgebildet ist, das an seinem oberen und seinem unteren freien Ende jeweils rotationssymmetrische Verjüngungen (2) aufweist.

4. Verfahren gemäß Anspruch 3, **dadurch gekennzeichnet, daß** der Schneidstempel jeweils im sich an den querschnittreduzierten Bereich anschließenden Bereich angeordnete Vertiefungen (3) auf der jeweils der Verjüngung (2) gegenüberliegenden Seite aufweist.

5. Verfahren gemäß Anspruch 1, **dadurch gekennzeichnet, daß** beim Einfassen des Gitterrostes eine Schweißtemperatur unterhalb der Verdampfungstemperatur des Zinks gewählt wird.

6. Verfahren gemäß Anspruch 5, **dadurch gekennzeichnet, daß** beim Einfassen des Gitterrostes das Schweißen als MIG-Löten von verzinkten Stählen mit A 202 M erfolgt.

## Claims

1. Method for the production of gratings, comprising the following steps in the following order:
• Hot-dip galvanizing of the bearing-bar strip or the bearing- and cross-bar strip,
• Punching the bearing bars or the bearing and cross bars and cutting them to length,
• Pressing of the grating,
• Banding of the grating.

2. Method according to claim 1, **characterised in that** the bearing-bar strip or the bearing-and cross-bar strip is hot-dip galvanized in a continuous process.

3. Method according to claim 1, **characterised in that** the cutting punch for punching the bearing bars or the bearing and cross bars is configured as a longish, flat element (1) that features rotationally symmetric reductions (2) at its upper and lower free ends.

4. Method according to claim 3, **characterised in that**, in the area adjacent to each of the areas with the smaller cross-section, the cutting punch features a depression (3) which is on the opposite side to that featuring a reduction (2).

5. Method according to claim 1, **characterised in that** for banding the grating, a welding temperature is selected which is below the vaporisation temperature of zinc.

6. Method according to claim 5, **characterised in that** the welding method known as "MIG soldering of galvanized steels with A 202 M" is used for banding the grating.

## Revendications

1. Procédé pour la fabrication de caillebotis comportant les étapes de procédé suivantes à effectuer dans l'ordre suivant :
- Galvanisation à chaud de la bande de barres portantes ou de la bande de barres portantes et de barres transversales,
- Découpe et coupe à la longueur des barres portantes ou des barres portantes et des barres transversales,
- Assemblage à la presse du caillebotis,
- Bordage du caillebotis.

2. Procédé selon la revendication 1, **caractérisé en ce que** la bande de barres portantes ou la bande de barres portantes et de barres transversales est galvanisée à chaud en continu.

3. Procédé selon la revendication 1, **caractérisé en ce que** le poinçon de coupe pour découper les barres portantes ou les barres portantes et les barres transversales a la forme d'un élément plat et allongé (1) présentant à chacune de ses extrémités libres inférieure et supérieure un rétrécissement, ces rétrécissements étant disposés l'un par rapport à l'autre selon une symétrie de révolution.

4. Procédé selon la revendication 3, **caractérisé en ce que** le poinçon de coupe présente dans chacune des zones succédant aux zones de section réduite un évidement (3) sur le côté opposé au rétrécissement.

5. Procédé selon la revendication 1, **caractérisé en ce que** lors du bordage du caillebotis, on utilise une température de soudure inférieure à la température de vaporisation du zinc.

6. Procédé selon la revendication 5, **caractérisé en ce que** lors du bordage du caillebotis, le soudage est réalisé par brasage par procédé MIG d'acier zingué avec A 202 M.
